# EUROPÄISCHE PATENTSCHRIFT

(11) **EP 3 571 098 B1**
(45) Veröffentlichungstag und Bekanntmachung des Hinweises auf die Patenterteilung: **05.08.2020**
(21) Anmeldenummer: 18701316.4
(22) Anmeldetag: 22.01.2018
(51) Int. Cl.: B60R 22/28

(54) **SICHERHEITSGURTEINRICHTUNG FÜR EIN FAHRZEUG**
SAFETY BELT DEVICE FOR A VEHICLE
SYSTÈME DE CEINTURE DE SÉCURITÉ POUR VÉHICULE

(30) Priorität: 23.01.2017 DE 102017201016
(43) Veröffentlichungstag der Anmeldung: 27.11.2019
(73) Patentinhaber: Volkswagen Aktiengesellschaft, 38440 Wolfsburg (DE)
(72) Erfinder: MÖKER, Carsten, 38471 Rühen (DE)
(86) Internationale Anmeldenummer: PCT/EP2018/051370
(87) Internationale Veröffentlichungsnummer: WO 2018/134382

(56) Entgegenhaltungen:
- DE-A1-102006 053 563
- DE-A1-102007 034 401
- DE-U1- 20 209 370

## Beschreibung

Die Erfindung betrifft eine Sicherheitsgurteinrichtung für ein Fahrzeug nach dem Oberbegriff des Patentanspruches 1.

Eine solche Sicherheitsgurteinrichtung kann beispielhaft einen Drei-Punkt-Sicherheitsgurt, bestehend aus einem Beckengurtanteil und einem Schultergurtanteil, sowie einen Gurtaufroller aufweisen, auf dessen Wickeltrommel der Sicherheitsgurt aufwickelbar ist. Bei einem, am Fahrzeuginsassen angelegten Sicherheitsgurt wird die Wickeltrommel des Gurtaufrollers im Falle einer unfallbedingten Fahrzeugverzögerung mit Hilfe einer darin verbauten Blockiereinrichtung blockiert, um einen Gurtauszug zu verhindern. Dadurch wirkt eine Gurtkraft auf den Fahrzeuginsassen. Um die auf den Fahrzeuginsassen bewirkende Gurtkraft zu begrenzen, kann eine Gurtkraftbegrenzungseinheit vorgesehen sein, mittels der die auf einen Fahrzeuginsassen ausgeübte Gurtkraft auf ein vordefiniertes Kraftniveau begrenzt ist.

Aus der GB 2 327 919 A ist eine gattungsgemäße Sicherheitsgurteinrichtung für ein Fahrzeug bekannt, das eine solche Gurtkraftbegrenzungseinheit aufweist. Diese ist als eine Kolben/Zylinderanordnung mit einem radial äußeren Kolbenrohr und einem radial innerhalb des Kolbenrohrs verlagerbaren Kolben realisiert. In einem Gurtkraftbegrenzungsfall wird der Kolben unter Aufweitung sowie plastischer Verformung des Kolbenrohrs um einen Kraftbegrenzungsweg in Axialrichtung verlagert, wodurch die auf den Fahrzeuginsassen ausgeübte Gurtkraft begrenzt ist.

In der GB 2 327 919 A weist das Kolbenrohr drei in Axialrichtung hintereinander angeordnete Rohrsegmente auf, an deren Innenumfang gleichmäßig umfangsverteilte Axialstege angeformt sind. Zur Einstellung einer Kraftkennlinie (d.h. Gurtkraftniveau über den Kraftbegrenzungsweg) weisen die Rohrsegmente unterschiedliche Anzahlen von Axialrippen auf. In ähnlicher Weise ist die aus der EP 0 568 327 A2 aufgebaute Gurtkraftbegrenzungseinheit aufgebaut, deren Kolbenrohr, über den Kraftbegrenzungsweg betrachtet, einen variierenden Innenquerschnitt aufweist. Die Bereitstellung von in der Axialrichtung variierenden Innenquerschnitten am Kolbenrohr ist jedoch mit hohem Fertigungsaufwand verbunden. Zudem ist aufgrund der in der GB 2 327 919 A materialeinheitlich und einstückig am Kolbenrohr-Innenumfang ausgebildeten Axialstege eine werksseitige Änderung der Kraftkennlinie der Gurtkraftbegrenzungseinheit nur mit hohem Werkzeugaufwand durchführbar.

Aus der DE 42 24 924 A1 ist eine weitere Gurtkraftbegrenzungseinheit bekannt, bei der die Materialstärke des darin verwendeten Kolbenrohrs in der Axialrichtung vergrößert wird.

Die DE 202 09 370 U1 offenbart eine Sicherheitsgurteinrichtung für ein Fahrzeug mit einem Gurtumlenkbeschlag, der an einer verschiebbaren Schiene montiert ist, wobei die Schiene über ein Deformationselement und ein Kopplungsmittel mit einem Sitz verbunden ist. Das Deformationselement weist einen Halter auf, in dem eine Hülse angeordnet ist. Bei Aktivierung einer pyrotechnischen Gurtstraffung wird ein mit dem Kopplungsmittel verbundenes Spreizelement in die Hülse hineingezogen, wobei unter plastischer Verformung der Hülse eine zusätzliche Länge des Kopplungsmittels freigegeben wird, um die Gurtkraft zu begrenzen.

Die Aufgabe der Erfindung besteht darin, eine Sicherheitsgurteinrichtung für ein Fahrzeug bereitzustellen, deren Gurtkraftbegrenzungseinheit in einfacher Weise eine Einstellung der Kraftkennlinie der Gurtkraftbegrenzungseinheit ermöglicht.

Die Aufgabe ist durch die Merkmale des Patentanspruches 1 gelöst. Bevorzugte Weiterbildungen der Erfindung sind in den Unteransprüchen offenbart.

Erfindungsgemäß wird auf einen, in der Axialrichtung variierenden Innenquerschnitt des Kolbenrohrs verzichtet. Anstelle dessen wird gemäß dem kennzeichnenden Teil des Patentanspruches 1 ein Rohrelement als ein separates Bauteil vorgesehen. Das Rohrelement ist unter Bildung einer Doppelrohrstruktur teleskopartig auf das Kolbenrohr aufschiebbar. In Abhängigkeit von der Axialposition des auf dem Kolbenrohr aufgeschobenen Rohrelementes kann in fertigungstechnisch einfacher Weise sowie ohne großen Werkzeugaufwand die Kraftkennlinie (d.h. der Kraftniveau-Verlauf über den Kraftbegrenzungsweg) eingestellt werden. Das Rohrelement kann beispielhaft lediglich ringförmig (d.h. mit sehr geringer Rohrlänge) ausgeführt sein oder eine vorgegebene größere Rohrlänge aufweisen, die jedoch deutlich kleiner als die Rohrlänge des Kolbenrohrs ausgelegt sein kann. Im Zusammenbauzustand weist daher das Kolbenrohr zumindest einen vom Rohrelement umfassten Kolbenrohrabschnitt sowie zumindest einen vom Rohrelement freigelegten Kolbenrohrabschnitt auf.

Fertigungstechnisch bevorzugt ist es, wenn der Innendurchmesser des Rohrelementes um ein geringfügiges Bewegungsspiel größer ausgelegt ist als der Außendurchmesser des Kolbenrohrs. Auf diese Weise kann im Fertigungsprozess das Rohrelement leichtgängig in seine vordefinierte Axialposition verstellt werden. In der vorgegebenen Axialposition kann das Rohrelement in beliebiger Weise am Kolbenrohr oder an einem angrenzenden Bauteil, insbesondere am Fahrzeugaufbau, fixiert werden, zum Beispiel durch eine kraft-, stoff- und/oder formschlüssige Verbindung. Fertigungstechnisch bevorzugt ist es, wenn das Rohrelement mittels einer Kleb- oder Prägeverbindung auf dem Kolbenrohr befestigt wird. Alternativ dazu kann auf eine solche feste Verbindung zwischen dem Rohrelement und dem Kolbenrohr verzichtet werden. Anstelle dessen kann das Rohrelement als eine Befestigungsschelle realisiert sein, die das Kolbenrohr an einer vordefinierten Axialposition umfangsseitig umgreift. Die Befestigungsschelle kann eine radial nach außen abragende Befestigungslasche aufweisen, mittels der die Befestigungsschelle an einem angrenzenden Bauteil, insbesondere am Fahrzeugaufbau, befestigbar ist. Auf diese Weise bleibt die Befestigungsschelle auch im Zusammenbauzustand in loser bzw. leicht lösbarer Anlage mit dem Kolbenrohr.

Im Hinblick auf eine einfache Einstellmöglichkeit der Kraftkennlinie der Gurtkraftbegrenzungseinheit ist es von Vorteil, wenn die oben erwähnte Befestigungslasche des Rohrelements ein Langloch zur Verschraubung mit dem angrenzenden Bauteil, insbesondere dem Fahrzeugaufbau, aufweist. Die Längserstreckung des Langsloches ist dabei bevorzugt achsparallel zum Kolbenrohr ausgerichtet. Mittels des als Befestigungsschelle ausgeführten Rohrelements ist nicht nur eine einfache Einstellmöglichkeit der Kradftkennlinie bereitgestellt, sondern in Doppelfunktion auch eine Verdrehsicherung der Baueinheit, bestehend aus Umlenkbeschlag und Kraftbegrenzungseinheit, gewährleistet.

In einer technischen Umsetzung ist das Kolbenrohr sowohl innen- als auch außenumfangsseitig über dessen gesamte Rohrlänge mit einem konstanten Innen- und Außendurchmesser (das heißt mit konstantem Innenquerschnitt) sowie bevorzugt glattzylindrisch ausgebildet. Auf diese Weise kann das Kolbenrohr in einer einfachen zylindrischen Bauteilgeometrie, d.h. ohne spezielle Innen- oder Außenstruktur, vorgehalten werden. In gleicher Weise kann auch das Rohrelement sowohl innen- als auch außenumfangsseitig über dessen gesamte Rohrlänge mit einem konstanten Innen- und Außendurchmesser sowie ebenfalls glattzylindrisch ausgeführt sein.

Mittels der Axialposition des Rohrelementes auf dem Kolbenrohr wird die Kraftkennlinie der Gurtkraftbegrenzungseinheit festgelegt. Exemplarisch kann die Gurtkraftbegrenzungseinheit eine progressive, eine degressive oder eine wellenförmige Kraftkennlinie aufweisen. Für einen progressiven Kraftniveau-Verlauf kann das Rohrelement am Ende des Kraftbegrenzungswegs auf dem Kolbenrohr befestigt sein. Anstelle dessen kann für einen degressiven Kraftniveau-Verlauf das Rohrelement zu Beginn des Kraftbegrenzungswegs auf dem Kolbenrohr befestigt sein. Für einen wellenförmigen Kraftniveau-Verlauf kann das Rohrelement auf einem Mittelabschnitt des Kolbenrohrs befestigt sein.

Die erfindungsgemäße Gurtkraftbegrenzungseinheit kann in einer Sicherheitsgurteinrichtung realisiert sein, die exemplarisch einen Drei-Punkt-Sicherheitsgurt mit einem Beckengurtanteil sowie einem Schultergurtanteil aufweist. Im angelegten Zustand kann der Sicherheitsgurt mittels einer Gurtzunge in lösbarer Verbindung mit einem fahrerseitigen Gurtschloss sein. Das Gurtschloss kann über ein Drahtseilelement sowie über die Kraftbegrenzungseinheit am Fahrzeugaufbau befestigt sein. In diesem Fall kann das Drahtseilelement mit seinem Seilende durch das Kolbenrohr der Gurtkraftbegrenzungseinheit geführt sein und am Kolben angebunden sein. Das Drahtseilelement kann ausgehend vom Gurtschloss durch einen fahrzeugaufbauseitigen Umlenkbeschlag mit Seilumlenkung geführt sein, wobei der Umlenkbeschlag aufbaufest an der Fahrzeugkarosserie montierbar ist. Im weiteren Verlauf kann sich am Umlenkbeschlag die Gurtkraftbegrenzungseinheit anschließen. In diesem Fall kann der Umlenkbeschlag eine Stützkontur aufweisen, gegen die das Kolbenrohr mit seiner dem Kolben abgewandten Seite im Gurtkraftbegrenzungsfall abgestützt werden kann.

Nachfolgend ist ein Ausführungsbeispiel der Erfindung anhand der beigefügten Figuren detailliert beschrieben.

Es zeigen:
- Fig. 1: in einer perspektivischen Darstellung eine Sicherheitsgurteinrichtung mit angelegtem Sicherheitsgurt, jedoch unter Weglassung des Fahrzeuginsassen;
- Fig. 2: eine Baueinheit, bestehend aus dem Gurtschloss der Sicherheitsgurteinrichtung und der Gurtkraftbegrenzungseinheit, in Alleinstellung;
- Fig. 3: in einer Ansicht entsprechend der Figur 2 in teilweiser Schnittdarstellung;
- Fig. 4: eine Kraftkennlinie der in der Figur 3 gezeigten Gurtkraftbegrenzungseinheit;
- Fig. 5 und 6: jeweils Ansichten entsprechend der Figuren 3 und 4 gemäß einem zweiten Ausführungsbeispiel;
- Fig. 7 und 8: jeweils Ansichten entsprechend der Figuren 3 und 4 gemäß einem dritten Ausführungsbeispiel;
- Fig. 9: eine Ansicht entsprechend der Figur 2 gemäß einem vierten Ausführungsbeispiel; und
- Fig. 10: eine Schnittdarstellung entlang der Schnittebene A-A aus der Fig. 9.

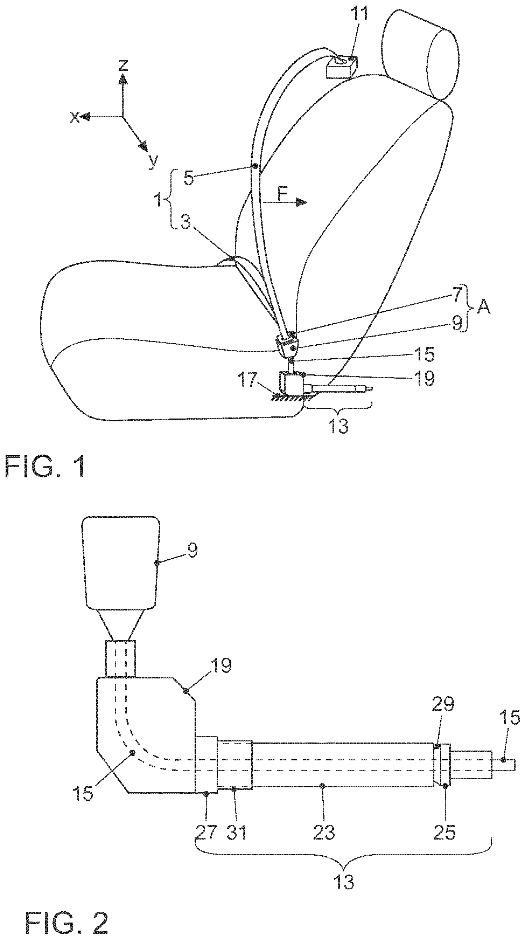

In der Fig. 1 ist ein Fahrzeugsitz mit zugeordneter Sicherheitsgurteinrichtung gezeigt, deren Sicherheitsgurt 1 im angelegten Zustand, jedoch ohne Fahrzeuginsassen, dargestellt ist. Demzufolge erstreckt sich in der Fahrzeugquerrichtung y ein Beckengurtanteil 3 des Sicherheitsgurtes 1 zwischen einem fahrzeuginneren Anbindungspunkt und einem fahrzeugäußeren Anbindungspunkt A. Der auf Beckenhöhe befindliche fahrzeuginnere Anbindungspunkt A ist lösbar ausgeführt, und zwar mit einer am Sicherheitsgurt 1 gehalterten Gurtzunge 7 und einem damit zusammenwirkenden, fahrzeugfesten Gurtschloss 9, in dem die Gurtzunge 7 eingesteckt ist. In etwa auf Schulterhöhe befindet sich ein dritter fahrzeugäußerer Anbindungspunkt. Dieser ist in gängiger Praxis durch einen nicht gezeigten, an einer nicht dargestellten Fahrzeugsäule montierten Umlenkbeschlag realisiert, um den der Schultergurtanteil 5 bis zu einem in der Fahrzeugsäule verbauten Gurtaufroller 11 geführt ist, in der der Sicherheitsgurt 1 auf einer Wickeltrommel aufwickelbar ist. Der Gurtaufroller 11 weist in gängiger Praxis eine Blockiereinheit auf. Bei einem, am Fahrzeuginsassen angelegten Sicherheitsgurt 1 wird die Wickeltrommel des Gurtaufrollers 9 im Fall einer unfallbedingten Fahrzeugverzögerung mit Hilfe der Blockiereinheit blockiert, um einen Gurtauszug zu verhindern. Dadurch wirkt eine Gurtkraft F (Fig. 1) vom Sicherheitsgurt 1 auf den Fahrzeuginsassen. Übersteigt die Gurtkraft F einen vorgegebenen Grenzwert, so wird eine Gurtkraftbegrenzungseinheit 13 aktiv, mittels der die auf den Fahrzeuginsassen ausgeübte Gurtkraft F auf ein vordefiniertes Kraftniveau begrenzbar ist.

Wie aus der Fig. 2 hervorgeht, ist das Gurtschloss 9 über ein Drahtseil 15 sowie über die Gurtkraftbegrenzungseinheit 13 an einem Umlenkbeschlag 19 befestigt, der am in der Fig. 1 grob angedeuteten Fahrzeugaufbau 17 montiert ist. Demzufolge ist das Drahtseil 15 mit einem Ende am Gurtschloss 9 befestigt und über den fahrzeugaufbauseitigen Umlenkbeschlag 19 mit Seilumlenkung geführt. Im weiteren Verlauf schließt sich die Gurtkraftbegrenzungseinheit 13 an, die als eine Kolben-/Zylinder-Anordnung realisiert ist, und zwar mit einem Kolbenrohr 23 und einem Kolben 25. Das Drahtseil 15 ist gemäß der Fig. 2 nach dem Umlenkbeschlag 19 durch das Kolbenrohr 25 geführt und am Kolben 25, zum Beispiel durch Verprägung, angebunden. Dieser ist in der seiner dargestellten Ruhelage oder Nichtgebrauchslage mit seiner konusartigen Kolbenspitze 29 in Anlage mit einer vom Umlenkbeschlag 19 abgewandten Stirnseite des Kolbenrohrs 23. Von daher ist das Kolbenrohr 23 in der Axialrichtung zwischen einem topfförmigen Anschlagelement 27, das am Umlenkbeschlag 19 ausgebildet ist, und der konusartigen Kolbenspitze 29 angeordnet, die teilweise in das Kolbenrohr 23 einragt.

Bei einer unfallbedingten Fahrzeugverzögerung blockiert die Blockiereinheit die Wickeltrommel des Gurtaufrollers 11, um einen Gurtauszug zu verhindern. Übersteigt die auf den Fahrzeuginsassen wirkende Gurtkraft F einen vorgegebenen Grenzwert, so wird der Kolben 25 unter Aufweitung sowie plastischer Verformung um einen Kraftbegrenzungsweg s innerhalb des Kolbenrohrs 23 verlagert. Auf diese Weise wird die auf den Fahrzeuginsassen ausgeübte Gurtkraft F auf ein vordefiniertes Kraftniveau begrenzt. Dabei entspricht der maximal mögliche Kraftbegrenzungsweg sₘₐₓ der Kolbenrohrlänge.

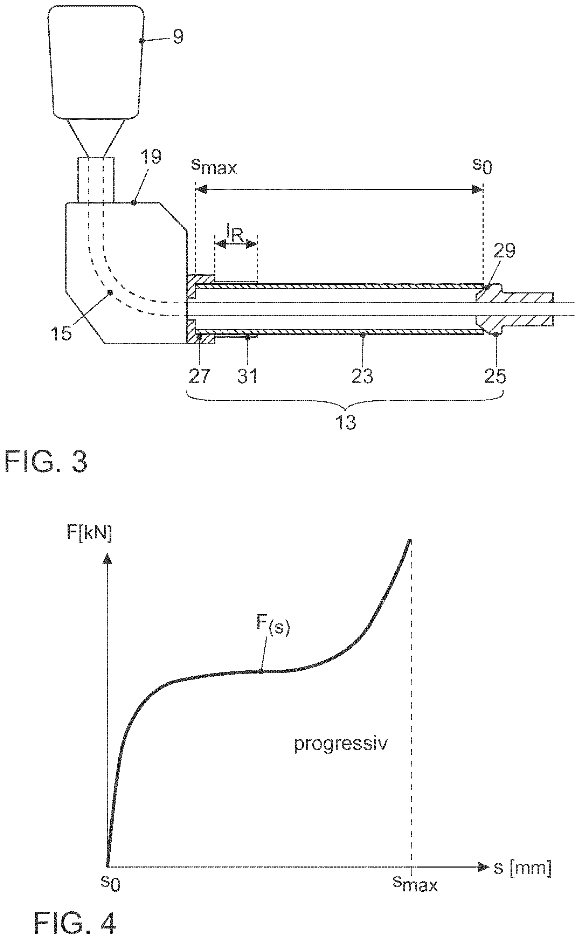

Das von der Gurtkraftbegrenzungseinheit 13 über den Kraftbegrenzungsweg s bereitgestellte Gurtkraftniveau ist anhand der in der Figur 4 gezeigten Kraftkennlinie dargestellt. Demnach steigt in einem Gurtkraftbegrenzungsfall, bei dem der Kolben 25 über den maximalen Kraftbegrenzungsweg sₘₐₓ verlagert wird, progressiv an. Eine solche Kraftkennlinie wird mit Hilfe eines Rohrelementes 31 eingestellt, das unter Bildung einer Doppelrohrstruktur teleskopartig auf das Kolbenrohr 23 aufgeschoben ist und dort in Axialrichtung zum Beispiel durch eine Kleb- oder Prägeverbindung fixiert ist. In der Fig. 2 und 3 ist das Rohrelement 31 am Ende des Kraftbegrenzungsweges s (d.h. unmittelbar am Anschlagelement 27) auf dem Kolbenrohr 23 positioniert. Die Rohrlänge l_{R} des Rohrelementes 31 beträgt rein beispielhaft 10% der Rohrlänge des Kolbenrohrs 23. Entsprechend weist das Kolbenrohr 23 einen vom Rohrelement 31 umfassten Rohrabschnitt sowie einen vom Rohrelement 31 freigelegten Rohrabschnitt auf.

Das Kolbenrohr 23 und das Rohrelement 31 sind sowohl innen- als auch außenumfangsseitig über deren gesamte Rohrlängen mit konstantem Innen- und Außendurchmesser, d.h. mit durchgängig konstanter Materialdicke, sowie glattzylindrisch ausgebildet. Um - bei noch nicht durchgeführter Kleb- oder Prägeverbindung - eine leichtgängige Verstellung des Rohrelementes 31 zu ermöglichen, ist der Innendurchmesser des Rohrelementes 31 um ein geringfügiges Bewegungsspiel größer ausgelegt als der Außendurchmesser des Kolbenrohrs 23.

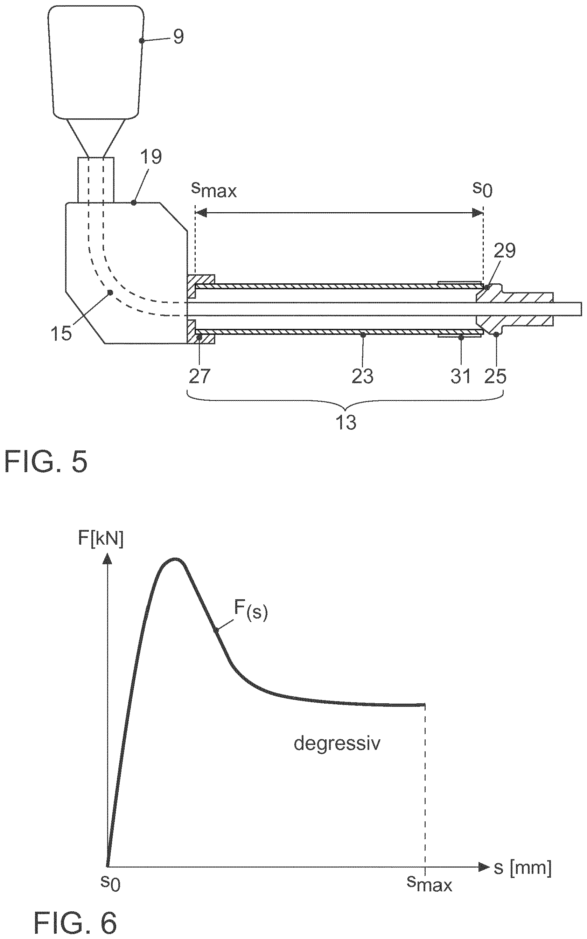

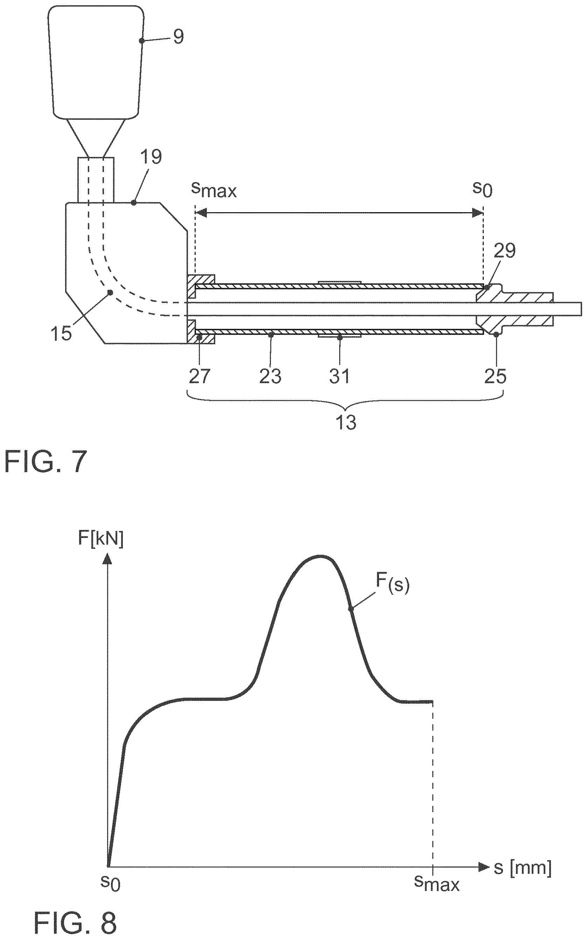

Alternativ zum obigen Ausführungsbeispiel ist in der Fig. 5 das Rohrelement 31 zu Beginn des Kraftbegrenzungswegs s (d.h. unmittelbar an der dem Kolben 25 zugewandten Kolbenrohrstirnseite) auf dem Kolbenrohr 23 positioniert. Auf diese Weise ergibt sich die in der Fig. 6 angedeutete Kraftkennlinie mit degressivem Kraftniveau-Verlauf F(s), bei dem sich zu Beginn der Gurtkraftbegrenzung ein hohes Kraftniveau einstellt, das im weiteren Kraftbegrenzungs-Verlauf reduziert wird. Alternativ dazu ist in der Fig. 7 das Rohrelement 31 auf einem Mittelabschnitt des Kolbenrohrs 23 positioniert, wodurch sich die in der Fig. 8 angedeutete Kraftkennlinie mit einem wellenförmigen Kraftniveau-Verlauf F(s) ergibt.

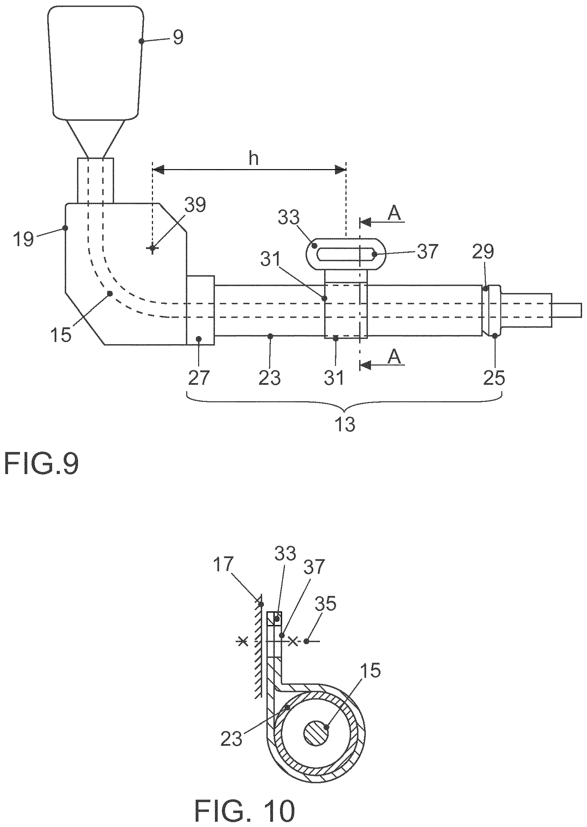

Alternativ zu den vorangegangenen Ausführungsbeispielen ist in der Fig. 9 und 10 auf eine feste Kleb- und/oder Prägeverbindung zwischen dem Rohrelement 31 und dem Kolbenrohr 23 verzichtet. Anstelle dessen ist in den Fig. 9 und 10 das Rohrelement 31 als eine Befestigungsschelle mit einer radial abragenden Befestigungslasche 33 realisiert, die über eine Schraubverbindung 35 (Fig. 10) am Fahrzeugaufbau 17 befestigt ist. Auf diese Weise bleibt die Befestigungsschelle 31 auch im Zusammenbauzustand in loser bzw. leicht lösbarer Anlage mit dem Kolbenrohr 23. Für eine einfache Einstellmöglichkeit der Kraftkennlinie der Gurtkraftbegrenzungseinheit 13 ist das Schraubloch 37 der Befestigungslasche 33 als ein Langloch ausgeführt, und zwar mit einer Längserstreckung achsparallel zum Kolbenrohr.

Die Befestigungsschelle 31 ist in einem Biegeverfahren aus einem streifenförmigen Blechteil hergestellt, dessen im Querschnitt kreisförmiger Rohrabschnitt das Kolbenrohr 23 umfangsseitig an einer vordefinierten Axialposition umgreift. In der Fig. 9 ist die von der Befestigungsschelle 31 radial nach außen abragende Befestigungslasche 33 über eine Hebelarmlänge h von einem Anbindungspunkt 39 beabstandet, an dem der Umlenkbeschlag 19 am Fahrzeugaufbau 17 befestigt ist.

In einem Lastfall bzw. im Gurtkraftbegrenzungsfall wird die in der Fig. 9 gezeigte Baueinheit, bestehend aus dem Gurtschloss 9, dem Umlenkbeschlag 19 und der Gurtkraftbegrenzungseinheit 13, mit einem Drehmoment um den Anbindungspunkt 39 beaufschlagt. Die Befestigungsschelle 31 wirkt in diesem Fall in Doppelfunktion als eine Verdrehsicherung bzw. Drehmomentenstütze, die einem Verdrehen der Baueinheit entgegenwirkt.

### Bezugszeichenliste

- 1: Sicherheitsgurt
- 3: Beckengurtanteil
- 5: Schultergurtanteil
- 7: Gurtzunge
- 9: Gurtschloss
- 11: Gurtaufroller
- 13: Gurtkraftbegrenzungseinheit
- 15: Drahtseilelement
- 17: Fahrzeugaufbau
- 19: Umlenkbeschlag
- 23: Kolbenrohr
- 25: Kolben
- 27: Anschlagelement
- 29: konusartige Kolbenspitze
- 31: Rohrelement
- 33: Befestigungslasche
- 35: Schraubverbindung
- 37: Langloch
- 39: Anbindungspunkt
- s: Kraftbegrenzungsweg
- A: lösbarer Anbindungspunkt
- F: Gurtkraft
- h: Hebelarmlänge

## Patentansprüche

1. Sicherheitsgurteinrichtung für ein Fahrzeug, mit einer Gurtkraftbegrenzungseinheit (13), die als eine Kolben-/Zylinder-Anordnung mit einem Kolbenrohr (23) und mit einem Kolben (25) aufgebaut ist, der in einem Gurtkraftbegrenzungsfall unter Aufweitung sowie plastischer Verformung um einen Kraftbegrenzungsweg (s) im Kolbenrohr (23) verlagerbar ist, wodurch die auf einen Fahrzeuginsassen ausgeübte Gurtkraft (F) auf ein vordefiniertes Kraftniveau begrenzt ist, **dadurch gekennzeichnet, dass** zur Einstellung des Kraftniveau-Verlaufes (F(s)) über den Kraftbegrenzungsweg (s) zumindest ein Rohrelement (31) vorgesehen ist, das unter Bildung einer Doppelrohrstruktur teleskopartig auf das Kolbenrohr (23) aufschiebbar ist.

2. Sicherheitsgurteinrichtung nach Anspruch 1, **dadurch gekennzeichnet, dass** die Rohrlänge (l_{R}) des Rohrelements (31) kleiner als die Rohrlänge des Kolbenrohrs (23) ausgelegt ist, so dass das Kolbenrohr (23) zumindest einen vom Rohrelement (31) umfassten Rohrabschnitt und zumindest einen vom Rohrelement freigelegten Rohrabschnitt aufweist.

3. Sicherheitsgurteinrichtung nach Anspruch 1 oder 2, **dadurch gekennzeichnet, dass** der Innendurchmesser des Rohrelements (31) um ein geringfügiges Bewegungsspiel größer als der Außendurchmesser des Kolbenrohrs (23) ist, und/oder dass insbesondere das Rohrelement (31) an einer vorgegebenen Axialposition am Kolbenrohr (23) oder an einem angrenzenden Bauteil, insbesondere am Fahrzeugaufbau (17), fixierbar ist, insbesondere durch eine kraft-, stoff- und/oder formschlüssige Verbindung, etwa eine Kleb- oder Prägeverbindung.

4. Sicherheitsgurteinrichtung nach Anspruch 3, **dadurch gekennzeichnet, dass** das Rohrelement (31) eine Befestigungsschelle ist, die das Kolbenrohr (23) an einer vordefinierten Axialposition umfangsseitig umgreift, und/oder das Rohrelement (31) eine radial nach außen abragende Befestigungslasche (33) aufweist, mittels der das Rohrelement (31) an einem angrenzenden Bauteil, insbesondere am Fahrzeugaufbau (17) befestigbar ist.

5. Sicherheitsgurteinrichtung nach Anspruch 4, **dadurch gekennzeichnet, dass** die Befestigungslasche (33) des Rohrelements (31) ein Langloch (37) zur Verschraubung mit dem angrenzenden Bauteil, insbesondere dem Fahrzeugaufbau (17), aufweist, und dass das die Längserstreckung des Langsloches (37) achsparallel zum Kolbenrohr (23) ausgerichtet ist.

6. Sicherheitsgurteinrichtung nach einem der vorhergehenden Ansprüche, **dadurch gekennzeichnet, dass** das Kolbenrohr (23) innen- und/oder außenumfangsseitig über dessen gesamte Rohrlänge mit konstantem Innen- und Außendurchmesser und/oder glattzylindrisch ausgebildet sind, und/oder dass das Rohrelement (31) innen- und/oder außenumfangsseitig über dessen gesamte Rohrlänge (l_{R}) mit konstantem Innen- und Außendurchmesser und/oder glattzylindrisch ausgebildet ist.

7. Sicherheitsgurteinrichtung nach einem der vorhergehenden Ansprüche, **dadurch gekennzeichnet, dass** für einen progressiven Kraftniveau-Verlauf das Rohrelement (31) am Ende (sₘₐₓ) des Kraftbegrenzungswegs (s) auf dem Kolbenrohr (23) positioniert ist, oder dass für einen degressiven Kraftniveau-Verlauf das Rohrelement (31) zu Beginn (s₀) des Kraftbegrenzungswegs (s) auf dem Kolbenrohr (23) positioniert ist, oder dass für einen wellenförmigen Kraftniveau-Verlauf das Rohrelement (31) auf einem Mittelabschnitt des Kolbenrohrs (23) positioniert ist.

8. Sicherheitsgurteinrichtung nach einem der vorhergehenden Ansprüche, **dadurch gekennzeichnet, dass** der Sicherheitsgurt (1) im angelegten Zustand mit einer Gurtzunge (7) in lösbarer Verbindung mit einem fahrzeugseitigen Gurtschloss (9) ist, das über ein Drahtseilelement (15) und über die Kraftbegrenzungseinheit (13) am Fahrzeugaufbau (17) befestigbar ist, und dass das Drahtseilelement (15) mit seinem Seilende durch das Kolbenrohr (23) geführt ist und am Kolben (25) angebunden ist.

9. Sicherheitsgurteinrichtung nach Anspruch 8, **dadurch gekennzeichnet, dass** das Drahtseilelement (15) über einen fahrzeugaufbauseitigen Beschlag (19) mit Seilumlenkung geführt ist, und dass der Beschlag (19) eine Stützkontur (27) aufweist, gegen die das Kolbenrohr (23) mit seiner dem Kolben (25) abgewandten Seite im Gurtkraftbegrenzungsfall abstützbar ist.

## Claims

1. Safety belt device for a vehicle, having a belt force limiting unit (13), which is designed as a piston/cylinder arrangement with a piston tube (23) and with a piston (25) which, in the event of limiting of the belt force, can be displaced by a force limiting distance (s) in the piston tube (23) while expanding and being plastically deformed, as a result of which the belt force (F) exerted on a vehicle occupant is limited to a predefined force level, **characterized in that**, in order to set the force level profile (F(s)) over the force limiting distance (s), at least one tubular element (31) is provided which can be pushed telescopically onto the piston tube (23) forming a double tube structure.

2. Safety belt device according to Claim 1, **characterized in that** the tube length (I_{R}) of the tubular element (31) is smaller than the tube length of the piston tube (23), and therefore the piston tube (23) has at least one tubular portion surrounded by the tubular element (31) and at least one tubular portion uncovered by the tubular element.

3. Safety belt device according to Claim 1 or 2, **characterized in that** the inside diameter of the tubular element (31) is greater by a slight movement clearance than the outside diameter of the piston tube (23), and/or **in that** in particular the tubular element (31) is fixable at a predetermined axial position to the piston tube (23) or to an adjacent component, in particular to the vehicle body (17), in particular by a force-fitting, integrally bonded and/or form-fitting connection, for example an adhesive connection or an embossing connection.

4. Safety belt device according to Claim 3, **characterized in that** the tubular element (31) is a fastening clip which engages circumferentially around the piston tube (23) at a predefined axial position, and/or the tubular element (31) has a radially outwardly protruding fastening plate (33) by means of which the tubular element (31) is fastenable to an adjacent component, in particular to the vehicle body (17).

5. Safety belt device according to Claim 4, **characterized in that** the fastening plate (33) of the tubular element (31) has an elongated hole (37) for the screw connection to the adjacent component, in particular to the vehicle body (17), and **in that** the longitudinal extent of the elongated hole (37) is oriented axially parallel to the piston tube (23) .

6. Safety belt device according to one of the preceding claims, **characterized in that** the piston tube (23) is formed on the inside and/or outside circumference over its entire tube length with a constant inside and outside diameter and/or in a smoothly cylindrical manner, and/or **in that** the tubular element (31) is formed on the inside and/or outside circumference over its entire tube length (I_{R}) with a constant inside and outside diameter and/or in a smoothly cylindrical manner.

7. Safety belt device according to one of the preceding claims, **characterized in that**, for a progressive force level profile, the tubular element (31) is positioned on the piston tube (23) at the end (sₘₐₓ) of the force limiting distance (s), or **in that**, for a degressive force level profile, the tubular element (31) is positioned on the piston tube (23) at the beginning (s₀) of the force limiting distance (s), or **in that**, for a wave-shaped force level profile, the tubular element (31) is positioned on a central portion of the piston tube (23).

8. Safety belt device according to one of the preceding claims, **characterized in that** the safety belt (1) in the applied state is releasably connected by a belt latch (7) to a vehicle-side belt buckle (9) which is fastenable to the vehicle body (17) via a wire cable element (15) and via the force limiting unit (13), and **in that** the wire cable element (15) is guided with its cable end through the piston tube (23) and is connected to the piston (25).

9. Safety belt device according to Claim 8, **characterized in that** the wire cable element (15) is guided via a vehicle-body-side fitting (19) with deflection of the cable, and **in that** the fitting (19) has a supporting contour (27) against which the piston tube (23) can be supported by its side facing away from the piston (25) in the event of the limiting of the belt force.

## Revendications

1. Système de ceinture de sécurité pour un véhicule, comportant une unité de limitation de force de la ceinture (13), qui est conçue sous la forme d'un ensemble piston/cylindre comportant un tube de piston (23) et comportant un piston (25) qui, dans une situation de limitation de force de la ceinture, peut être déplacé dans le tube de piston (23) sur une course de limitation de force (s) avec élargissement ainsi que déformation plastique, de sorte que la force (F) exercée par la ceinture sur un occupant du véhicule soit limitée à un niveau de force prédéfini, **caractérisé en ce qu'**au moins un élément tubulaire (31) est prévu pour ajuster la variation du niveau de force (F(s)) sur la course de limitation de force (s), qui peut effectuer un coulissement télescopique sur le tube de piston (23) avec formation d'une structure à deux tubes.

2. Système de ceinture de sécurité selon la revendication 1, **caractérisé en ce que** la longueur de tube (l_{R}) de l'élément tubulaire (31) est configurée inférieure à la longueur de tube du tube de piston (23), de telle sorte que le tube de piston (23) comprenne au moins une section de tube comprise par l'élément tubulaire (31) et au moins une section de tube dégagée de l'élément tubulaire.

3. Système de ceinture de sécurité selon la revendication 1 ou 2, **caractérisé en ce que** le diamètre interne de l'élément tubulaire (31) est supérieur d'un faible jeu de mouvement au diamètre externe du tube de piston (23), et/ou **en ce que** notamment l'élément tubulaire (31) peut être fixé à une position axiale prédéterminée sur le tube de piston (23) ou sur un composant adjacent, notamment sur la structure de véhicule (17), notamment par une liaison par accouplement de force, de matière et/ou de forme, par exemple une liaison par adhésion ou gaufrage.

4. Système de ceinture de sécurité selon la revendication 3, **caractérisé en ce que** l'élément tubulaire (31) est un collier de fixation, qui entoure sur la périphérie le tube de piston (23) à une position axiale prédéfinie, et/ou l'élément tubulaire (31) comprend une bride de fixation (33) dépassant radialement vers l'extérieur, au moyen de laquelle l'élément tubulaire (31) peut être fixé sur un composant adjacent, notamment sur la structure de véhicule (17).

5. Système de ceinture de sécurité selon la revendication 4, **caractérisé en ce que** la bride de fixation (33) de l'élément tubulaire (31) comprend un trou longitudinal (37) pour le vissage avec le composant adjacent, notamment la structure de véhicule (17), et **en ce que** l'extension longitudinale du trou longitudinal (37) est orientée parallèlement à l'axe du tube de piston (23).

6. Système de ceinture de sécurité selon l'une quelconque des revendications précédentes, **caractérisé en ce que** le tube de piston (23) est configuré sur la périphérie interne et/ou externe sur sa longueur de tube totale avec un diamètre interne et externe constant et/ou sous forme cylindrique lisse, et/ou **en ce que** l'élément tubulaire (31) est configuré sur la périphérie interne et/ou externe sur sa longueur de tube totale (l_{R}) avec un diamètre interne et externe constant et/ou sous forme cylindrique lisse.

7. Système de ceinture de sécurité selon l'une quelconque des revendications précédentes, **caractérisé en ce que**, pour une variation du niveau de force progressive, l'élément tubulaire (31) est positionné à la fin (sₘₐₓ) de la course de limitation de force (s) sur le tube de piston (23), ou **en ce que**, pour une variation du niveau de force dégressive, l'élément tubulaire (31) est positionné au début (s₀) de la course de limitation de force (s) sur le tube de piston (23), ou **en ce que**, pour une variation du niveau de forme ondulée, l'élément tubulaire (31) est positionné sur une section centrale du tube de piston (23).

8. Système de ceinture de sécurité selon l'une quelconque des revendications précédentes, **caractérisé en ce que** la ceinture de sécurité (1) est, à l'état mis en place, avec une languette de ceinture (7), en connexion amovible avec une boucle de ceinture (9) du côté du véhicule, qui peut être fixée par l'intermédiaire d'un élément câble métallique (15) et par l'intermédiaire de l'unité de limitation de force (13) sur la structure de véhicule (17), et **en ce que** l'élément câble métallique (15) est acheminé au travers du tube de piston (23) avec son extrémité de câble et relié au piston (25).

9. Système de ceinture de sécurité selon la revendication 8, **caractérisé en ce que** l'élément câble métallique (15) est acheminé par l'intermédiaire d'une garniture (19) du côté de la structure de véhicule avec renvoi de câble, et **en ce que** la garniture (19) présente un contour d'appui (27), contre lequel le tube de piston (23) peut s'appuyer avec son côté détourné du piston (25) dans la situation de limitation de force de la ceinture.
